# EUROPÄISCHE PATENTSCHRIFT

(11) **EP 3 107 860 B1**
(45) Veröffentlichungstag und Bekanntmachung des Hinweises auf die Patenterteilung: **04.03.2020**
(21) Anmeldenummer: 15700493.8
(22) Anmeldetag: 19.01.2015
(51) Int. Cl.: B66C 1/10, B66C 19/00, B65G 63/00, B65G 1/04, B66F 9/07

(54) **VERFAHREN UND VORRICHTUNG ZUM EIN- UND AUSLAGERN ODER UMLAGERN VON CONTAINERN IN HOCHREGALLAGERN**
METHOD AND APPARATUS FOR STORING AND RETRIEVING OR SHIFTING CONTAINERS IN HIGH-BAY WAREHOUSES
PROCÉDÉ ET DISPOSITIF D'EMMAGASINAGE ET DÉMAGASINAGE OU DE TRANSFERT DE CONTENEURS DANS DES ENTREPÔTS À RAYONNAGES DE GRANDE HAUTEUR

(30) Priorität: 19.02.2014 DE 102014203006
(43) Veröffentlichungstag der Anmeldung: 28.12.2016
(73) Patentinhaber: AMOVA GmbH, 57250 Netphen (DE)
(72) Erfinder: HEIDE, Carsten, 57250 Netphen (DE); BRÜCK, Volker, Mudersbach 57555 (DE); BANNERT, Michél, 57074 Siegen (DE)
(74) Vertreter: Grosse, Wolf-Dietrich Rüdiger
(86) Internationale Anmeldenummer: PCT/EP2015/050871
(87) Internationale Veröffentlichungsnummer: WO 2015/124342

(56) Entgegenhaltungen:
- WO-A1-98/35892
- WO-A1-2007/066903
- DE-A1-102008 007 860
- DE-U1- 9 321 200
- JP-A- S5 598 033
- US-A- 3 993 202
- US-A- 4 331 419
- US-A- 5 102 283

## Beschreibung

Die Erfindung betrifft ein Verfahren und eine Vorrichtung zum Ein- und Auslagern oder Umlagern von Containern in Hochregallagern einer Umschlaganlage insbesondere eines See- oder Binnenhafens, wobei die Container von in sich parallel zu in Lagermodulen mehrgeschossig angeordneten Regalfächern des Hochregallagers erstreckenden Gassen verfahrbaren Regalbediengeräten transportiert sowie ein- und ausgestapelt oder umgelagert werden.

Durch die EP 1 272 414 B1 ist eine Umschlaganlage in einem See- und Binnenhafen für insbesondere Standard-Container, wie 20 TEU- oder 40 FEU-Container, mit einem entlang eines Kais vorgesehenen, aus einzelnen zeilenartigen Lagermodulen bestehendem Containerlager und mindestens einer mit den Lagermodulen zusammenwirkenden Ladeanlage für den Lastumschlag von und zu einem am Kai liegendem Schiff bekannt geworden. Die Ladeanlage für den Lastumschlag ist mit mindestens einem Hafenmobilkran ausgerüstet. Dessen Lastausleger reicht in den Bereich mindestens eines innerhalb des aus einer Anzahl von Lagermodulen mit einer von der Modulbreite abhängigen Anzahl von Containerreihen bestehenden Containerlagers vorgesehenen, eine Schnittstelle zwischen dem Hafenmobilkran und den Lagermodulen des Containerlagers bildenden Übergabeplatzes.

Ein von dem verschwenkbaren Ausleger des Hafenmobilkrans auf den Übergabeplatz abgesetzter Container wird von einem Stapelkran ergriffen, der den Horizontaltransport und das Stapeln der Container übernimmt. Der Stapelkran ist als aufgeständerter Brückenkran mit einer Laufkatze ausgebildet und überspannt jeweils ein z.B. neun Container breites und drei bis vier Container hohes Lagermodul des quer zum Kai verlaufenden Containerlagers. Die Lagermodule sind durch mindestens zwei auf quer zu den einzelnen Lagermodulen in unterschiedlichen horizontalen Ebenen verlaufenden Schienenbahnen verfahrbare, unabhängig voneinander agierende Quertransporter miteinander verknüpft. Die Container werden in den Regalfächern der Lagermodule des Containerlagers aufeinander gestapelt, was ein flexibles Ein- und Auslagern verhindert.

Aus der DE 10 2008 007 860 A1 ist es bekannt, Container in beliebiger Anzahl, über- und nebeneinander, einzeln in Regalfächer ein- bzw. auszulagern und dadurch einen Containerumschlag in beliebiger Reihenfolge zu ermöglichen. Dazu kommen in Anbetracht der in Hafenterminals nur begrenzt zur Verfügung stehenden Flächen und um deren Ausdehnung zu vermeiden, Portalkrane zum Einsatz, die eine engere Lagerung der Container als in den Gassen verfahrbare Flurstapler bzw. Regalbediengeräte erlauben. Die Container werden dabei einzeln zugänglich und mit etwas Luft übereinander in die Regalfächer eingebracht, die an beiden Längsseiten, der Breite der mit ihren Stirnseiten in das Regal eingebrachten Container entsprechend, in Richtung der Regaltiefe mit Fahrschienen ausgerüstet sind. Der über den Gassen verfahrbare Brückenkran trägt eine mittels Seilen heb- und senkbare Containeraufnahme, die auf einer mit Laufschienen ausgerüsteten Übergabebrücke angeordnet ist und an ihren Enden über motorisch oder hydraulisch höhenverstellbare, mit eckseitigen Anhängepunkten der Container verriegelbare Containergreifer verfügt, wobei die Container auf im Regal bzw. Regalfach angeordnete Querholme abgesetzt bzw. von dort aufgenommen werden können. Die Containeraufnahme wird für das Ein- und Auslagern der Container über angetriebene Laufrollen auf den Fahrschienen der Regalfächer in deren Längsrichtung über die gesamte Regaltiefe wechselseitig befahren. Zur Anpassung an unterschiedliche Längen der Container weist die Containeraufnahme in der Länge verstellbare Tragholme auf, an denen die Containergreifer vorgesehen sind. Das Dokument US 3993 202 schlägt vor, zwei Regalrahmen in einem Abstand anzuordnen, der etwas größer ist als die standardisierte Breite von unterschiedlich langen Behältern. Der Kran bewegt sich im Raum zwischen den Regalen und besteht aus zwei Einheiten, von denen jede einen Turm, einen Motor-getriebenen Wagen für den Turm und einen Motor hat, der den Aufzug auf- und ab bewegt .

Der Erfindung liegt die Aufgabe zugrunde, ein Verfahren und eine Vorrichtung zu schaffen, mit denen sich bei gattungsgemäßen Hochregallagern der Transportmitteleinsatz verringern und weiterhin ein Zugriff auf jeden einzelnen Container bei einer engen Bauweise des Hochregallagers auch mit Flurstaplern erreichen lässt.

Diese Aufgabe wird erfindungsgemäß durch ein Verfahren gemäß Anspruch 1 gelöst.

Bei diesem Verfahren zum Ein- und Auslagern von Containern ergibt sich ein großer Vorteil dadurch, dass die Längsseiteneinlagerung bzw. -auslagerung im Zusammenspiel mit dem schubweisen Aus- bzw. Zusammenfahren der Teleskopieraufnahmen mit den daran angehängten Containern eine äußerst platzsparende Bauweise des Hochregallagers mit kleinstmöglicher Breitenabmessung der Fahrgassen erlaubt. Diese brauchen nämlich nur geringfügig breiter zu sein als die Breite der Container, um durch einen hinreichenden seitlichen Zwischenraum ein sicheres Vorbeifahren an den Lagermodulen mit den Regalfächern zu gewährleisten. Die Regalbediengeräte können daher eine kompakte Bauweise haben und benötigen keine einen zusätzlichen Raum beanspruchenden, vorkragenden Ausleger- bzw. Greiferarme zum Ein- und Auslagern bzw. Stapeln oder Umlagern. Die breiteste.Kontur des Regalbediengerätes entspricht weitestgehend der Containerbreite und nimmt die eingefahrenen Teleskopieraufnahmen einschließlich angehängtem Container ohne Überstand auf. Schon gleich mit der einsetzenden Handlingsbewegung tauchen die Teleskopieraufnahmen beim Teleskopieren gemeinsam mit dem Container mit zunehmender horizontaler Verlagerung bis zum Erreichen der endgültigen Einlagerungsposition in das Regalfach ein.

Vorteilhaft ist das Verfahren durch einen Einlagerungsvorgang dergestalt gekennzeichnet,
- dass am Einfahrende des Hochregallagers die Container sich mit ihrer Längsachse parallel zum Hochregallager erstreckend an einer Seite neben den Fahrgassen bereitgestellt werden,
- dass anschließend ein in der Gasse verfahrbares Regalbediengerät bis vor den aufzunehmenden Container verfahren wird und in hängender Position einen über seine Anhängepunkte verriegelten Container übernimmt, wozu durch eine Handlingsbewegung orthogonal zur Fahrgasse aus dem Regalbediengerät mit Verriegelungsmitteln ausgerüstete Teleskopieraufnahmen bis über die Container-Anhängepunkte ausgefahren und zum Verriegeln abgesenkt werden,
- dass nach dem Verriegeln die Teleskopieraufnahmen mit dem angehängten Container angehoben und durch eine gegenläufige Handlingsbewegung in das Regalbediengerät zurückgefahren werden, bis der Container eine in der Ebene mit der Fahrgasse fluchtende Hängeposition respektive Transportlage im Regalbediengerät einnimmt,
- dass anschließend das Regalbediengerät in der Fahrgasse vor ein zu belegendes Regalfach verfahren wird und die Teleskopieraufnahmen, die vorzugsweise an einer Hubbrücke angeordnet sind, vertikal angehoben werden, wenn sich das Regalfach in einem höheren Geschoss befindet,
- dass der solchermaßen vorpositionierte Container durch eine Handlingsbewegung der Teleskopieraufnahmen orthogonal zur Fahrgasse in das Regalfach eingebracht wird,
- dass in der Folge der Container mit seinen Containereckbereichen auf an den die Regalfächer begrenzenden Vertikalpfosten der Lagermodule angeordneten Eckpunkt-Stützauflagen abgesetzt wird, und
- dass nach dem Entriegeln des Containers die Teleskopieraufnahmen angehoben und in ihre zurückgezogene Ausgangsposition bewegt werden.

Beim Auslagern oder Umlagern, d. h. Wechsel des Lagerplatzes innerhalb eines Lagermoduls oder in einer anderen Fahrgasse, z. B. zur Durchsatzoptimierung, eines Containers, wobei die Teleskopieraufnahmen aus dem Regalbediengerät heraus in ihre Aufnahmeposition im Regalfach bewegt werden, kehren sich die vollautomatisch ablaufenden Handlings- und Fahr- sowie Verriegelungsbewegungen zu dem vorbeschriebenen Einlagerungsverfahren um.

Eine erfindungsgemäße Vorrichtung, insbesondere zur Durchführung des Verfahrens, sieht vor, dass das Hochregallager zur Längsseiteneinlagerung der Container aus beliebig vielen, in Längsrichtung entlang einer Gassenseite aneinander gereihten und in Breitenrichtung getrennt jeweils durch eine Gasse aufeinander folgenden mehrgeschossigen, in der Höhe mehrere Regalfächer aufweisenden Lagermodulen mit einer der Containerbreite entsprechenden Tiefe besteht, und in den Regalgassen hin und her verfahrbare Regalbediengeräte aufweist, die zur Aufnahme eines Containers mit orthogonal zur Fahrgasse ein- und ausrückbaren sowie heb- und senkbaren Teleskopieraufnahmen ausgebildet sind. Die zum Einlagern in die Regalfächer der Lagermodule vorgesehenen Container werden von Transportfahrzeugen und / oder zwischengeschaltete Transfermittel, z. B. Schiebetische, die die Container nach dem Absetzen durch das Transportfahrzeug in den Zugriffsbereich des Regalbediengerätes befördern, an einer Stirnseite des Hochregallagers neben den Fahrgassen bereitgestellt, wo sie von den Regalbediengeräten übernommen und mit ihren schmalen Stirnseiten in Gassenrichtung weisend zu einem Regalfach transportiert werden.

Zum Auslagern aus einem Regalfach vorgesehene Container werden von dem Regalbediengerät mit ihren Längsseiten voran waagerecht aus dem Regalfach bis in die Kontur des Regalbediengerätes bewegt und dann mit ihrer schmalen Stirnseite in Gassenrichtung weisend zu der der Einlagerungsseite gegenüberliegenden Stirnseite des Hochregallagers transportiert, wo sie für den Abtransport bereitgestellt werden. Hierbei ist anzumerken, dass der Materialfluss alle Freiheitsgrade hat und eine statische Zuordnung der Stirnseiten nicht festgeschrieben ist, so dass von beiden Stirnseiten des Hochregallagers aus sowohl Ein- als auch Auslagerungsvorgänge stattfinden können.

Die beim Einlagern mit ihren Längsseiten voran waagerecht aus der Kontur des Regalbediengerätes heraus in das Regalfach bewegten Container werden dort mit ihren bodenseitigen Eckbereichen auf in den Regalfächern dazu vorgesehenen Eckpunktauflagen von dem Regalbediengerät durch eine Hubbewegung abgesetzt.

Mit den Regalbediengeräten, die vorzugsweise von beiden Stirnseiten des Hochregallagers in die Gassen einfahren können, ist ein beliebiger Zugriff auf jeden einzelnen in den Regalfächern der mehrgeschossigen Lagermodule eingelagerten Container möglich.

Das flur- bzw. gassengebundene Regalbediengerät weist nach einer Ausgestaltung der Erfindung einen aus Vertikalständern und diese miteinander verbindenden Kopf- bzw. Fußholmen bestehenden Rahmen mit einer dem mehrgeschossigen Hochregallager entsprechenden Höhe auf.

Zum Verfahren des Regalbediengerätes ist vorteilhaft in den Fußholmen ein Fahrantrieb integriert und erfolgt über eine bei Regalbediengeräten übliche Rad/Schiene-Verbindung.

Eine bevorzugte Ausgestaltung der Erfindung sieht vor, dass in Führungen der Vertikalständer eine Hubeinrichtung läuft, die aus sich nach oben hin gabel- bzw. y-artig weitenden Seitenständern und diese an den beiden sich jeweils gegenüberliegenden Gabelenden zu einem Rahmen miteinander verbindenden, im Abstand voneinander parallel verlaufenden Längsholmen besteht, wobei zur Aussteifung der Hubeinrichtung unterhalb der Längsholme im Abstand voneinander parallel verlaufende Streben vorgesehen sind, die sich jeweils vom Fußende des einen Seitenständers zum Fußende des anderen Seitenständers erstrecken. Die solchermaßen ausgebildete Hubeinrichtung, die aufgrund ihrer die beiden Seitenständer verbindenden Bauweise auch als Hubbrücke bezeichnet werden kann, bleibt bei allen erforderlichen Handlingsbewegungen selbst stets in der Achse des Regalbediengerätes.

Erfindungsgemäß ist zum Anheben bzw. Absenken der Hubeinrichtung bzw. Hubbrücke eine Seilzugvorrichtung, bestehend aus einem Seil, einer Seiltrommel, Umlenkrollen, einem Hubmotor und einem Hubgetriebe vorgesehen, worüber die Hubeinrichtung bzw. Hubbrücke in exakt waagerechter Lage in jeder Höhe innerhalb des Regalbediengerätes genau in Bezug auf ein Regalfach positioniert werden kann.

Die Länge der Hubeinrichtung bzw. Hubbrücke zur Aufnahme einer Containers ist hierbei nach der am größten vorkommenden Containerlänge und die symmetrische Weitung der gabel- bzw. y-artigen Seitenständer nach der standardisierten Containerbreite ausgelegt, so dass die größte Außenkontur der Hubeinrichtung bzw. Hubbrücke deckungsgleich zur Außenkontur der Container sein kann. Das Hochregallager kann demnach Lagerplätze für Container mit unterschiedlichen Längen und Höhen enthalten, die von dem Regalbediengerät transportiert und gehandhabt werden. Bei den Containern handelt es sich z. B. um Normcontainer entsprechend DIN-ISO-668 Abmessungen und ISO-6346 Typen.

Eine weitere Ausgestaltung der Erfindung sieht vor, dass an den Längsholmen der Hubeinrichtung bzw. Hubbrücke deren freien Abstand überbrückend entsprechend der kleinsten Containerlänge voneinander beabstandet zwei stationäre Teleskopieraufnahmen und entsprechend der größten Containerlänge voneinander beabstandet zwei weitere stationäre Teleskopieaufnahmen angeordnet sind.

Zum Ein- bzw. Auslagern eines standardisierten 20-Fuß-Containers TEU (Twenty-foot Equivalent Unit) kommen hierbei die beiden mit der geringsten Länge voneinander beabstandeten, inneren Teleskopieraufnahmen zum Einsatz, während das Ein- bzw. Auslagern eines standardisierten 40-Fuß-Containers FEU (Forty-foot Equivalent Unit) die beiden mit der größten Länge voneinander beabstandeten, äußeren Teleskopieraufnahmen übernehmen. Die stationären Teleskopieraufnahmen sind mit ihren Grundgehäusen an der Unterseite der Längsholme befestigt. wobei die beiden inneren gegenüber den beiden äußeren Teleskopieraufnahmen höhenversetzt angeordnet sind.

Es ist vorgesehen, dass an den aneinander zugewandten Innenseiten der Längsholme Linearführungen angeordnet sind, in denen zwei Teleskopieraufnahmen verfahrbar und durch eine Bewegung aufeinander zu oder voneinander weg entsprechend der Länge des jeweiligen Containers positionierbar sind. Somit lassen sich mit lediglich zwei Teleskopieraufnahmen sowohl 20-Fuß-Container als auch 40-Fuß-Container oder andere Abmessungen besitzende Container ein- und auslagern bzw. umlagern, wozu die verfahrbaren Teleskopieraufnahmen nach einem Vorschlag der Erfindung mit auf ihrem Grundgehäuse in Trag- bzw. Stützböcken hochstehend angeordneten Rollen in den Linearführungen der Längsholme abrollen.

Des Weiteren ist hierbei erfindungsgemäß vorgesehen, dass für jede Linearführung an den Seiten des Grundgehäuses der Teleskopieraufnahmen jeweils zwei Doppelrollenanordnungen vorgesehen sind. Die somit insgesamt Acht-Rollen-Halterung erlaubt einen sicheren und verzugsfreien Bewegungsablauf der Teleskopieraufnahmen innerhalb der Linearführungen.

Eine vorteilhafte Ausführung der Erfindung sieht vor, dass sowohl das Grundgehäuse der stationären Teleskopieraufnahmen als auch das Grundgehäuse der verfahrbaren Teleskopieraufnahmen zwei ein- und ausziehbare Teleskopschübe aufnimmt, wobei ein äußerer Teleskopschub mit beidseitigen Außen-Führungsprofilen auf Laufrollen des Grundgehäuses und ein innerer Teleskopschub mit beidseitig angeordneten Laufrollen in Innen-Führungsprofilen des äußeren Teleskopschubs läuft.

Die solchermaßen im Grundgehäuse integrierten Teleskopschübe, die vorzugsweise über Zahnstangentriebe verfahrbar sind, erlauben eine kompakte Bauweise der Teleskopieraufnahmen, so dass weder das Grundgehäuse noch die in Grundstellung vollständig eingefahrenen Teleskopschübe über die Breite der Hubeinrichtung bzw. Hubbrücke vorkragen.

Ferner weisen die Teleskopschübe in Richtung der Längsseiteneinlagerung des Containers gesehen ein vorderes, am inneren Teleskopschub und ein hinteres, am äußeren Teleskopschub angeordnetes Verriegelungsmittel auf. Die Verriegelungsmittel können dabei als sogenannte Twistlock-Bolzen, die genormt sind, ausgebildet sein und rasten in komplementäre Öffnungen auf der Containeroberseite ein.

Weiterhin kann vorgesehen werden, dass an der Schmalseite eines Vertikalständers des Regalbediengerätes eine am Vertikalständer und am Fußholm befestigte Bühnenkonstruktion zur Aufnahme von Versorgungsmitteln für die Hubeinrichtung, den Fahrantrieb des Regalbediengerätes und die verfahrbaren Teleskopieraufnahmen angeordnet ist. Die Bühnenkonstruktion dient als Plattform für beispielsweise Schalt- und Elektroschränke, Seiltrommeln, Hubmotor und Hubgetriebe sowie Bremsen und Bremswiderstände, wobei die Breite der Bühnenkonstruktion in etwa identisch ist mit der Breite der Hubeinrichtung bzw. des Regalbediengerätes.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen, vereinfachten Gesamtansicht ein mehrgeschossiges Hochregallager mit in Regalgassen flurgebunden verfahrbaren Regalbediengeräten;
- Fig. 2: in einer perspektivischen Gesamtansicht als Einzelheit ein Regalbediengerät;
- Fig. 3: als Einzelheit des Hochregallagers der Fig. 1 in einer perspektivischen Teilansicht ein vor einem Regalfach eines Lagermoduls stehendes Regalbediengerät mit zum Einlagern eines Containers bis in das Regalfach ausgefahrenen Teleskopieraufnahmen;
- Fig. 4: in einer perspektivischen Teilansicht als Einzelheit des Regalbediengerätes der Fig. 3 dessen Hubbrücke mit einem an den Teleskopieraufnahmen hängend ausgefahrenen Container;
- Fig. 5: in perspektivischer Darstellung als Einzelheit wie zuvor in den Fig. 4 und 5 die Hubbrücke des Regalbediengerätes mit hier einem gegenüber der Fig. 4 von den Teleskopieraufnahmen hängend und verriegelt aufgenommenen Container mit einer kleineren Längenabmessung, wozu die Teleskopieraufnahmen in Linearführungen der Längsholme der Hubbrücke aufeinander zu verfahren worden sind;
- Fig. 6: in perspektivischer Darstellung wie zuvor in den Fig. 4 und 5 eine Hubbrücke, demgegenüber mit der Längenabmessung entsprechend dem kleinsten Container und dem größten Container stationär an den Hubbrücken-Längsholmen befestigten Teleskopieraufnahmen, die von vornherein so angeordnet sind, dass sie mit den Anhängepunkten der Container verriegelt werden können;
- Fig. 7: in einer perspektivischen Gesamtansicht als Einzelheit eine Teleskopieraufnahme in ihrer Ausgangsposition mit eingefahrenen Teleskopschüben; und
- Fig. 8: die Teleskopieraufnahme der Fig. 7 mit ausgefahrenen Teleskopschüben.

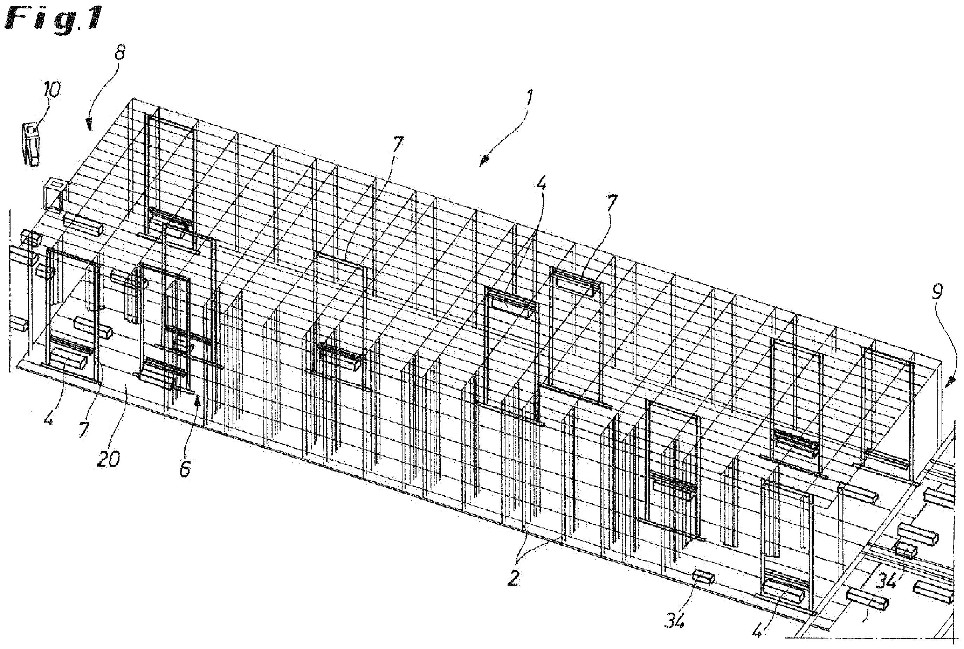

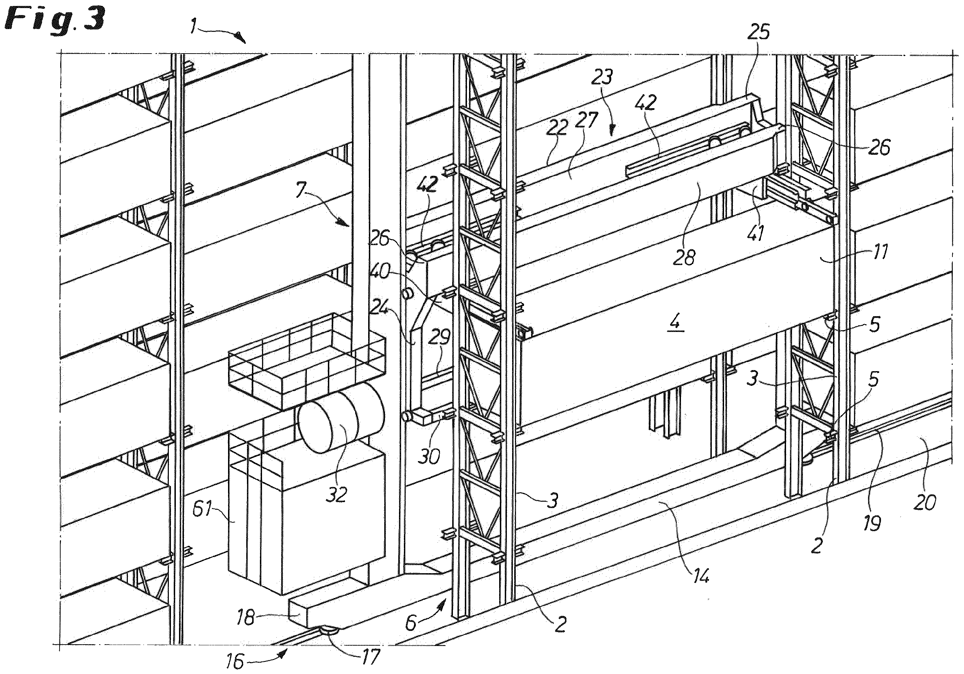

Die schematische Fig. 1 zeigt ein Hochregallager 1, das aus in aneinandergereihten Lagermodulen 2 mehrgeschossig angeordneten Regalfächern 3 zum Ein- und Auslagern von Containern 4 besteht, wobei die Regalfächer 3 mit Eckpunktauflagen 5 zur Aufnahme der Container 4 ausgebildet sind (vgl. hierzu Fig. 3).

Zwischen den Lagermodulen 2 sind sich über die gesamte Länge des Hochregallagers 1 erstreckende Fahrgassen 6 für in diesen hin und her verfahrbare Regalbediengeräte 7 ausgebildet, wobei die Regalbediengeräte 7 von beiden Stirnseiten 8, 9 des Hochregallagers 1 in die Fahrgassen 6 einfahren können.

An der vorderen Stirnseite 8 - und / oder optional der hinteren Stirnseite - des Hochregallagers 1 werden die Container 4 von Transportfahrzeugen 10 und gegebenenfalls zwischengeschaltete Transfermitteln (nicht dargestellt), z. B. Schiebetische, sich mit ihrer Längsachse parallel zum Hochregallager 1 erstreckend an einer Seite neben der Fahrgasse 6 bereitgestellt. Dort werden die Container 4 von den Regalbediengeräten 7 in hängender Position übernommen und über die Fahrgassen 6 zu einem Regalfach 3 eines Lagermoduls 2 transportiert, in das sie mit ihrer Längsseite 11 voran eingelagert werden. Abweichend vom Ausführungsbeispiel und abhängig von der tatsächlichen Integration des Hochregallagers in ein Container-Terminal können sich Ein- und Auslagerungspunkte z. B. an den Längsseiten des Hochregallagers befinden.

Ein mittels eines Regalbediengerätes 7 zur Auslagerung aus einem Regalfach 3 entnommener Container 4 wird über die Fahrgassen 6 zur hinteren Stirnseite 9 des Hochregallagers 1 transportiert und dort zur Übernahme für einen Weitertransport abgestellt.

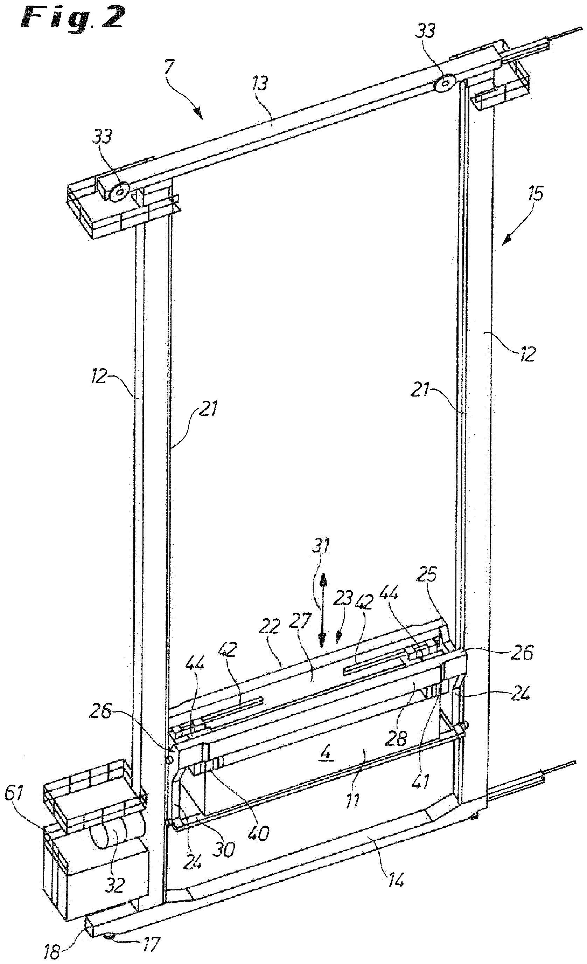

Das in Fig. 2 als Einzelheit gezeigte Regalbediengerät 7 weist einen aus Vertikalständern 12 und diese miteinander verbindenden Kopf- und Fußholmen 13, 14 bestehenden Rahmen 15 mit einer den mehrgeschossigen Lagermodulen 2 entsprechenden Höhe auf.

Das Regalbediengerät 7 ist über einen Zahnstangentrieb 16 verfahrbar, wobei ein angetriebenes Zahnrad 17 im Endbereich 18 des Fußholms 14 integriert und die zu kämmende Zahnstange 19 im Boden 20 der Fahrgasse 6 angeordnet ist, wie in Fig. 3 angedeutet.

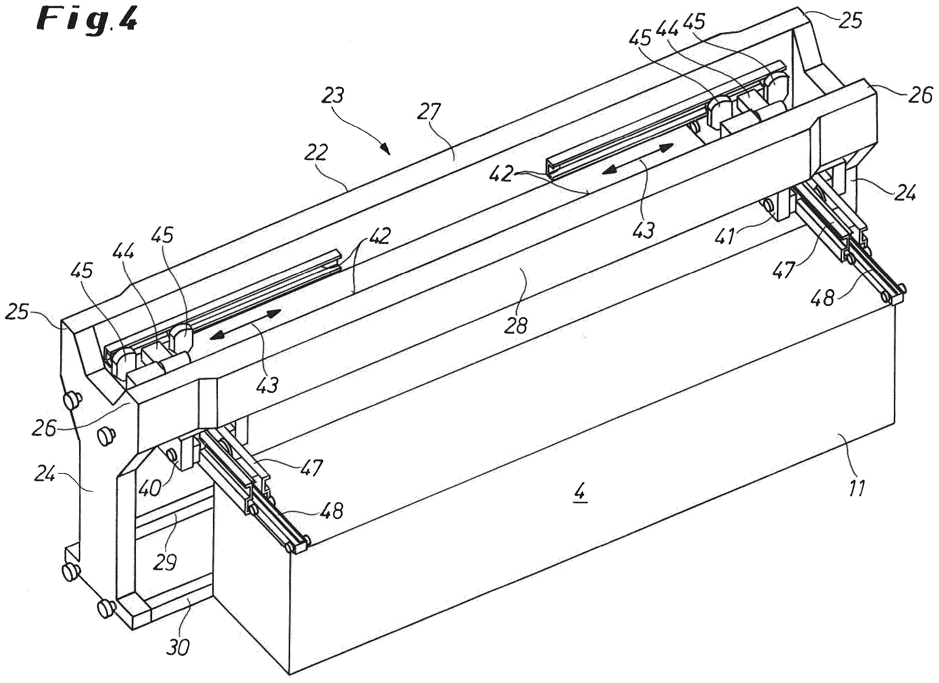

Die Vertikalständer 12 sind mit Führungen 21 ausgebildet, in denen eine Hubbrücke 22 einer Hubeinrichtung 23 läuft, die aus sich nach oben hin gabelartig weitenden Seitenständern 24 und diese an den beiden sich jeweils gegenüberliegenden Gabelenden 25, 26 zu einem Rahmen miteinander verbindenden, im Abstand voneinander parallel verlaufenden Längsholmen 27, 28 besteht. Zur Aussteifung der Hubeinrichtung 23 sind am unteren Ende der Seitenständer 24 und diese überbrückend im Abstand voneinander parallel verlaufende Fußstreben 29, 30 vorgesehen (vgl. hierzu Fig. 4, 5 und 6).

Zum Anheben bzw. Absenken der Hubbrücke 22 gemäß Doppelpfeil 31 ist eine Seilzugvorrichtung vorgesehen, von der hier lediglich die Seilzugtrommel 32 und die am Kopfholm 13 des Regalbediengerätes 7 angeordneten Umlenkrollen 33 dargestellt sind.

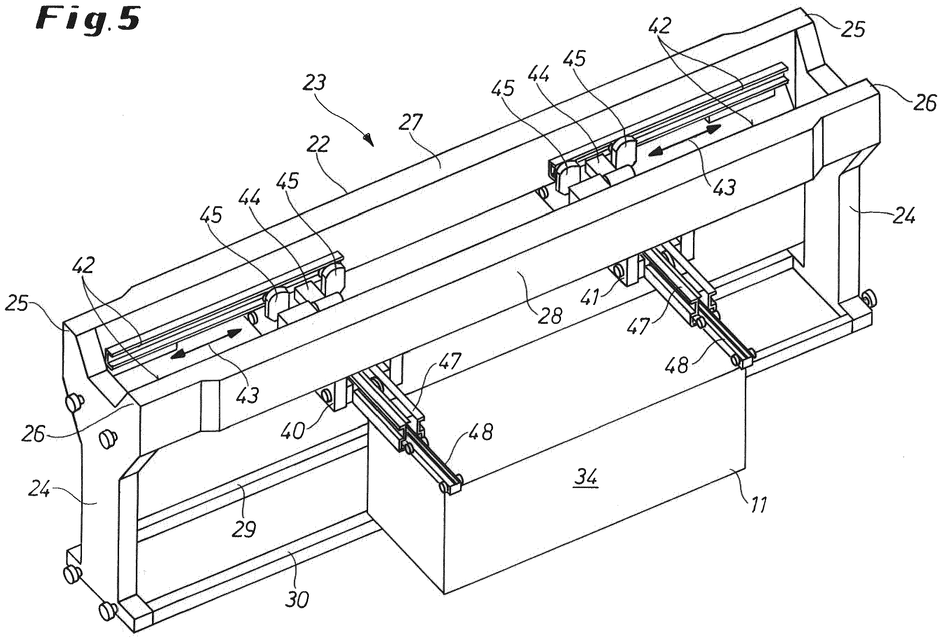

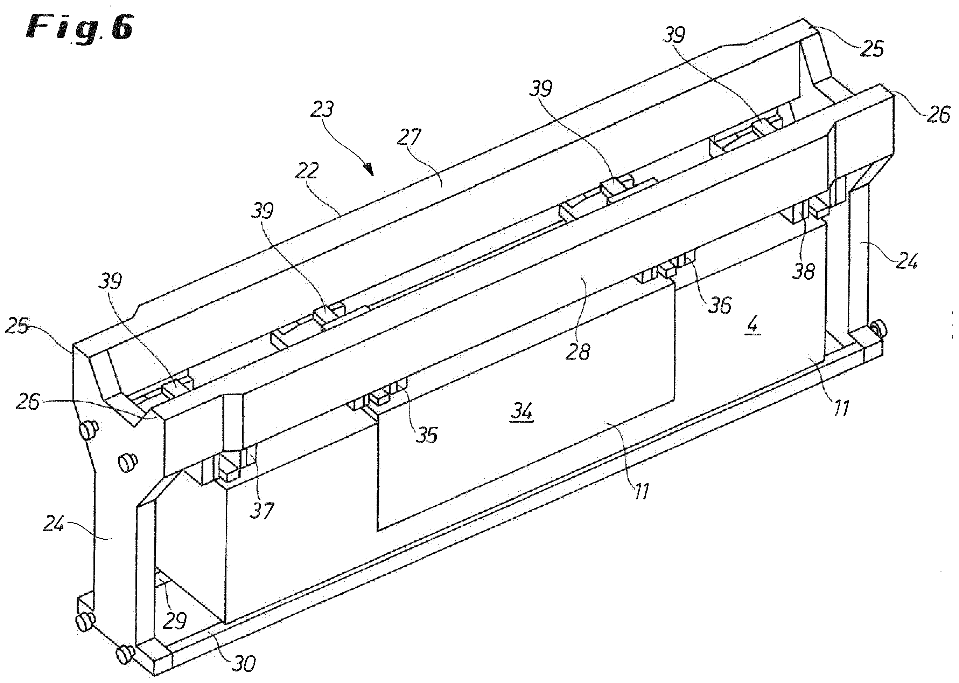

Die Länge der Hubbrücke 22 bzw. der Hubeinrichtung 23 ist zur Aufnahme des Containers 4, der die am größten vorkommende Containerlänge von z.B. 40 FEU (Forty-foot Equivalent Unit) aufweist, ausgelegt. Weiterhin sollen aber auch Container 34, die die am kleinsten vorkommende Containerlänge von z.B. 20 TEU (Twenty-foot Equivalent Unit) aufweisen, von der Hubeinrichtung 23 erfasst und transportiert werden können (vgl. hierzu Fig. 5 und 6).

Wie in Fig. 6 gezeigt, sind daher an den Längsholmen 27 und 28 der Hubbrücke 22 zwei stationäre innere Teleskopieraufnahmen 35, 36 zur Aufnahme des kürzeren Containers 34 und zwei entsprechend weiter voneinander beabstandete äußere Teleskopieraufnahmen 37, 38 zur Aufnahme des längeren Containers 4 vorgesehen. Die stationären Teleskopieraufnahmen 35 bis 38 sind mit ihren Grundgehäusen 39 an den Unterseiten der Längsholme 27 und 28 befestigt, und zwar die inneren höhenversetzt gegenüber den äußeren

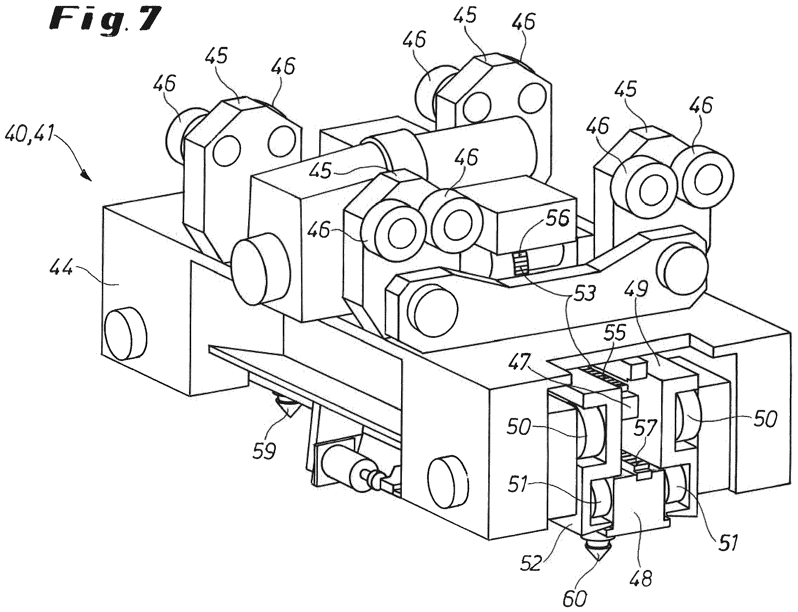

Gemäß einer in Fig. 5 gezeigten weiteren Ausführungsform sind nur zwei Teleskopieraufnahmen 40, 41 vorgesehen, die in Linearführungen 42 der Längsholme 27 und 28 verfahrbar sind und somit durch eine Bewegung aufeinander zu oder voneinander weg - Doppelpfeil 43 - entsprechend der Länge des Containers 34 oder des Containers 4 positioniert werden können (vgl. hierzu Fig. 2, 3 und 4). Die verfahrbaren Teleskopieraufnahmen 40, 41 werden über auf ihrem Grundgehäuse 44 an Trag- bzw. Stützböcken 45 angeordneten Doppelrollen 46 in den Linearführungen 42 der Längsholme 27 und 28 gehalten (vgl. hierzu Fig. 7).

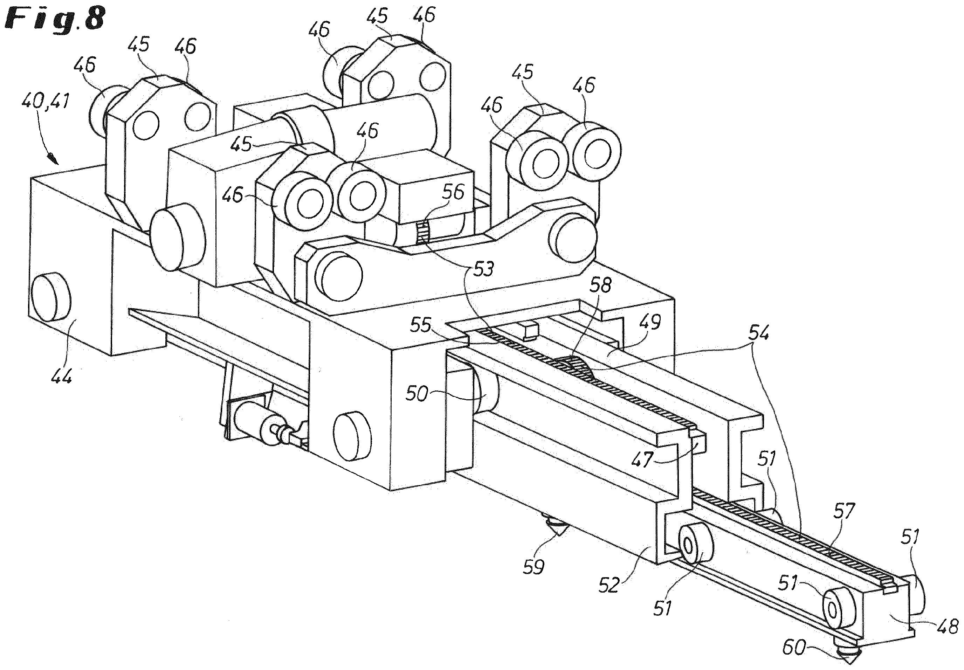

Sowohl das Grundgehäuse 39 der stationären Teleskopieraufnahmen 35 bis 38 als auch das Grundgehäuse 44 der verfahrbaren Teleskopieraufnahmen 40, 41 nimmt einen äußeren Teleskopschub 47 und einen inneren Teleskopschub 48 auf, wobei der äußere Teleskopschub 47 mit beidseitigen Außen-Führungsprofilen 49 auf Laufrollen 50 des Grundgehäuses 39 bzw. 44 und der innere Teleskopschub 48 mit beidseitig angeordneten Laufrollen 51 in Innen-Führungsprofilen 52 des äußeren Teleskopschubs 47 läuft (vgl. hierzu Fig. 7 und 8).

Das Ein- und Ausrücken des äußeren und des inneren Teleskopschubs 47, 48 erfolgt jeweils über Zahnstangentriebe 53, 54. Bei dem Zahnstangentrieb 53 für den äußeren Teleskopschub 47 ist eine Zahnstange 55 zwischen den Außen-Führungsprofilen 49 vorgesehen, während ein die Zahnstange 55 kämmendes Ritzel 56 an der Oberseite der Grundgehäuse 39 und 44 angeordnet ist. Bei dem Zahnstangentrieb 54 für den inneren Teleskopschub 48 ist eine Zahnstange 57 auf dem Teleskopschub 48 selbst vorgesehen, während ein die Zahnstange 57 kämmendes Ritzel 58 zwischen den Außen-Führungsprofilen 49 des äußeren Teleskopschubs 47 angeordnet ist.

Zur Verriegelung mit den Containern 4, 34 sind die Teleskopschübe 47, 48 jeweils an ihrer Unterseite mit sogenannten Twistlock-Bolzen 59, 60 ausgebildet.

Ferner ist das Regalbediengerät 7 mit einer am Vertikalständer 12 und dem Endbereich 18 des Fußholms 14 angeordneten Bühnenkonstruktion 61 ausgebildet. Die Bühnenkonstruktion 61 nimmt die für die Hubvorrichtung 23, den Fahrantrieb 16 des Regalbediengerätes 7 und die für die Ansteuerung der Teleskopieraufnahmen 35 bis 38 und 40, 41 benötigten Einrichtungen auf.

Anhand der Fig. 1 bis Fig. 4 wird nachfolgend ein Einlagerungsvorgang eines Containers 4 in das Hochregallager 1 beschrieben.

Das Regalbediengerät 7 wird mit vollständig eingerückten äußeren und inneren Teleskopschüben 47, 48 über seinen Zahnstangentrieb 16 in der Fahrgasse 6 bis zur vorderen Stirnseite 8 des Hochregallagers 1 verfahren, um dort einen sich mit seiner Längsachse parallel zum Hochregallager 1 erstreckend an einer Seite neben der Fahrgasse 6 bereitgestellten Container 4 aufzunehmen. Dazu werden die Teleskopieraufnahmen 40, 41 über ihre Doppelrollen 46 entsprechend der Länge des aufzunehmenden Containers 4 in den Linearführungen 42 verfahren und anschließend die äußeren und inneren Teleskopschübe 47, 48 mittels ihrer Zahnstangengetriebe 53, 54 über den Container 4 ausgefahren und über den Container-Anhängepunkten abgesenkt. Durch den vorderen und hinteren Twistlock-Bolzen 59, 60 wird der Container nun mit dem äußeren und inneren Teleskopschub 47, 48 verriegelt.

Nach dem Verriegeln werden die äußeren und inneren Teleskopschübe 47, 48 mit dem angehängten Container 4 durch einen Freihub der Hubbrücke 22 angehoben und über die Zahnstangengetriebe 53, 54 in das Regalbediengerät 7 bzw. unter die Hubbrücke 22 zurückgefahren, bis der Container 4 eine in der Ebene mit der Fahrgasse 6 fluchtende Hängeposition bzw. Transportlage im Regalbediengerät 7 einnimmt.

Daraufhin wird das Regalbediengerät 7 über seinen Zahnstangentrieb 16 in der Fahrgasse 6 vor ein zu belegendes Regalfach 3 eines Lagermoduls 2 verfahren und die Hubbrücke 22 mit dem angehängten Container 4 zum horizontalen, teleskopierenden Handlingsvorgang positioniert. Der Container 4 kann nun durch ein Ausrücken der äußeren und inneren Teleskopschübe 47, 48 mit seiner Längsseite 11 voran in das Regalfach 3 teleskopiert und dort durch Absenken der Hubbrücke 22 auf den Eckpunktauflagen 5 abgesetzt werden.

Nachdem die Verriegelung des Containers 4 durch Entriegeln der Twistlock-Bolzen 59, 60 aufgehoben ist, werden die äußeren und inneren Teleskopschübe 47, 48 angehoben und über die Zahnstangentriebe 53, 54 in ihre zurückgezogene Ausgangsposition unterhalb der Hubbrücke 22 bewegt, so dass das Regalbediengerät 7 für einen neuerlichen Einlagerungs- bzw. Auslagerungsvorgang bereit ist.

Beim Auslagern eines Containers 4, 34 aus einem Regalfach 3 eines Lagermoduls 2 mittels des Regalbediengerätes 7, wobei der Container 4, 34 dann zur hinteren Stirnseite 9 des Hochregallagers 1 verbracht wird, kehren sich die vollautomatisch gesteuerten Fahr-, Hub- und Teleskopier- sowie Verriegelungsbewegungen zu dem vorbeschriebenen Einlagerungsverfahren um.

### Bezugszeichenliste:

- 1: Hochregallager
- 2: Lagermodul
- 3: Regalfach
- 4: Container (40 FEU)
- 5: Eckpunktauflage
- 6: Fahrgasse
- 7: Regalbediengerät
- 8: vordere Stirnseite
- 9: hintere Stirnseite
- 10: Transportfahrzeug
- 11: Längsseite
- 12: Vertikalständer
- 13: Kopfholm
- 14: Fußholm
- 15: Rahmen
- 16: Zahnstangentrieb
- 17: Zahnrad
- 18: Endbereich
- 19: Zahnstange
- 20: Boden
- 21: Führung
- 22: Hubbrücke
- 23: Hubeinrichtung
- 24: Seitenständer
- 25: Gabelende
- 26: Gabelende
- 27: Längsholm
- 28: Längsholm
- 29: Fußstrebe
- 30: Fußstrebe
- 31: Doppelpfeil
- 32: Seilzugtrommel
- 33: Umlenkrolle
- 34: Container (20 TEU)
- 35: Teleskopieraufnahme
- 36: Teleskopieraufnahme
- 37: Teleskopieraufnahme
- 38: Teleskopieraufnahme
- 39: Grundgehäuse
- 40: Teleskopieraufnahme
- 41: Teleskopieraufnahme
- 42: Linearführung
- 43: Doppelpfeil
- 44: Grundgehäuse
- 45: Trag- bzw. Stützbock
- 46: Doppelrolle
- 47: äußerer Teleskopschub
- 48: innerer Teleskopschub
- 49: Außen-Führungsprofil
- 50: Laufrolle
- 51: Laufrolle
- 52: Innen-Führungsprofil
- 53: Zahnstangentrieb
- 54: Zahnstangentrieb
- 55: Zahnstange
- 56: Ritzel
- 57: Zahnstange
- 58: Ritzel
- 59: Twistlock-Bolzen
- 60: Twistlock-Bolzen
- 61: Bühnenkonstruktion

## Patentansprüche

1. Verfahren zum Ein- und Auslagern oder Umlagern von Containern (4, 34) in Hochregallagern (1) einer Umschlaganlage insbesondere eines See- oder Binnenhafens, wobei die Container (4, 34) von in sich parallel zu in Lagermodulen (2) mehrgeschossig angeordneten Regalfächern (3) des Hochregallagers (1) erstreckenden Gassen (6) verfahrbaren Regalbediengeräten (7) transportiert sowie ein- und ausgestapelt oder umgelagert **dadurch gekennzeichnet, dass** an den einander zugewandten Innenseiten der Längsholme (27, 28) Linearführungen (42) vorgesehen sind, in denen zwei Teleskopieraufnahmen (40, 41) angeordnet sind und die Container (4, 34) von heb- und senkbaren Teleskopieraufnahmen (35 bis 38; 40, 41) des Regalbediengerätes (7) mit ihren Längsseiten (11) voran aus einer vorzugsweise nicht über die umlaufende Außenkontur des Regalbediengerätes (7) hinausgehenden Transportlage teleskopierend in die Regalfächer (3) eingelagert werden bzw. daraus entnommen und in die Transportlage im Regalbediengerät (7) zurück teleskopiert werden, wobei die zwei Teleskopieraufnahmen (40, 41) in den Linearführungen verfahrbar und durch eine Bewegung aufeinander zu und voneinander weg entsprechend der Länge des jeweiligen Containers (4, 34) positionierbar sind.

2. Verfahren nach Anspruch 1,
**dadurch gekennzeichnet,**
**dass** die Container (4, 34) von den Teleskopieraufnahmen (35 bis 38; 40, 41) zur Ein- bzw. Auslagerung hängend aufgenommen werden.

3. Verfahren nach Anspruch 1 oder 2,
**dadurch gekennzeichnet,**
**dass** die Container (4, 34) mit Abstützung nur an ihren Eckpunkten in die Regalfächer (3) eingelagert werden.

4. Verfahren nach einem der Ansprüche 1 bis 3,
**gekennzeichnet durch**
einen Einlagerungsvorgang dergestalt,
- dass am Einfahrende (8) des Hochregallagers (1) die Container (4, 34) sich mit ihrer Längsachse parallel zum Hochregallager (1) erstreckend an einer Seite neben den Fahrgassen (6) bereitgestellt werden,
- dass anschließend ein in der Gasse (6) verfahrbares Regalbediengerät (7) bis vor den aufzunehmenden Container (4, 34) verfahren wird und in hängender Position einen über seine Anhängepunkte verriegelten Container (4, 34) übernimmt, wozu durch eine Handlingsbewegung orthogonal zur Fahrgasse (6) aus dem Regalbediengerät (7) mit Verriegelungsmitteln (59, 60) ausgerüstete Teleskopieraufnahmen (35 bis 38; 40, 41) bis über die Container-Anhängepunkte ausgefahren und über diese abgesenkt werden,
- dass nach dem Verriegeln die Teleskopieraufnahmen (35 bis 38; 40, 41) mit dem angehängten Container (4, 34) angehoben und durch eine gegenläufige Handlingbewegung in das Regalbediengerät (7) zurückgefahren werden, bis der Container (4, 34) eine in der Ebene mit der Fahrgasse (6) fluchtende Hängeposition respektive Transportlage im Regalbediengerät (7) einnimmt,
- dass anschließend das Regalbediengerät (7) in der Fahrgasse (6) vor ein zu belegendes Regalfach (3) verfahren wird und die Teleskopieraufnahmen (35 bis 38; 40, 41), die vorzugsweise an einer Hubbrücke (22) angeordnet sind, vertikal angehoben werden, wenn sich das Regalfach (3) in einem höheren Geschoss befindet,
- dass der solchermaßen vorpositionierte Container (4, 34) durch eine Handlingsbewegung der Teleskopieraufnahmen (35 bis 38; 40, 41) orthogonal zur Fahrgasse (6) in das Regalfach (3) eingebracht wird,
- dass in der Folge der Container (4, 34) mit seinen Containereckbereichen auf an den die Regalfächer (3) begrenzenden Vertikalpfosten der Lagermodule (2) angeordneten Eckpunkt-Auflagen (5) abgesetzt wird, und
- dass nach dem Entriegeln des Containers (4, 34) die Teleskopieraufnahmen (35, bis 38; 40, 41) angehoben und in ihre zurückgezogene Ausgangsposition bewegt werden.

5. Vorrichtung zum Ein- und Auslagern oder Umlagern von Containern (4, 34) in Hochregallagern (1) einer Umschlaganlage insbesondere eines See- oder Binnenhafens, wobei die Container (4, 34) von in sich parallel zu in Lagermodulen (2) mehrgeschossig angeordneten Regalfächern (3) des Hochregallagers (1) erstreckenden Gassen (6) verfahrbaren Regalbediengeräten (7) transportiert sowie ein- und ausgelagert oder umgelagert werden, insbesondere zur Durchführung des Verfahrens, wobei
das Hochregallager (1) zur Längsseiteneinlagerung der Container (4, 34) aus beliebig vielen, in Längsrichtung entlang einer Gassenseite aneinandergereihten und in Breitenrichtung getrennt jeweils durch eine Gasse (6) aufeinanderfolgenden mehrgeschossigen, in der Höhe mehrere Regalfächer (3) aufweisenden Lagermodulen (2) mit einer der Containerbreite entsprechenden Tiefe besteht, und in den Regalgassen (6) hin und her verfahrbare Regalbediengeräte (7) aufweist, die zur Aufnahme eines Containers (4, 34) mit orthogonal zur Fahrgasse (6) ein- und ausrückbaren sowie heb- und senkbaren Teleskopieraufnahmen (35 bis 38; 40, 41) ausgebildet sind,
**dadurch gekennzeichnet,**
**dass** an den einander zugewandten Innenseiten der Längsholme (27, 28) Linearführungen (42) vorgesehen sind, n denen zwei Teleskopieraufnahmen (40, 41) verfahrbar und durch eine Bewegung aufeinander zu oder voneinander weg entsprechend der Länge des jeweiligen Containers (4, 34) positionierbar sind.

6. Vorrichtung nach Anspruch 5,
**dadurch gekennzeichnet,**
**dass** das flurgebundene Regalbediengerät (7) einen aus Vertikalständern (12) und diese miteinander verbindenden Kopf- und Fußholmen (13, 14) bestehenden Rahmen (15) mit einer den mehrgeschossigen Hochregallager (1) entsprechenden Höhe aufweist.

7. Vorrichtung nach Anspruch 5 oder 6,
**dadurch gekennzeichnet,**
**dass** in den Fußholmen (14) ein Fahrantrieb (16) zum flurgebundenen Verfahren des Regalbediengerätes (7) integriert ist.

8. Vorrichtung nach einem der Ansprüche 5 bis 7,
**dadurch gekennzeichnet,**
**dass** in Führungen (21) der Vertikalständer (12) eine Hubeinrichtung (23) läuft, die aus sich nach oben hin gabel- bzw. y-artig weitenden Seitenständern (24) und diese an den beiden sich jeweils gegenüberliegenden Gabelenden (25, 26) zu einem Rahmen miteinander verbindenden, im Abstand voneinander parallel verlaufenden Längsholmen (27, 28) besteht, wobei zur Aussteifung der Hubeinrichtung (23) unterhalb der Längsholme (27, 28) im Abstand voneinander parallel verlaufende Streben (29, 30) vorgesehen sind, die sich jeweils vom Fußende des einen Seitenständers (24) zum Fußende des anderen Seitenständers (24) erstrecken.

9. Vorrichtung nach einem der Ansprüche 5 bis 8,
**dadurch gekennzeichnet,**
**dass** ein Anheben bzw. Absenken der Hubeinrichtung (23) über eine Seilzugvorrichtung, bestehend aus einem Seil, einer Seiltrommel (32), Umlenkrollen (33), einem Hubmotor und einem Hubgetriebe, erfolgt.

10. Vorrichtung nach einem der Ansprüche 5 bis 9,
**dadurch gekennzeichnet,**
**dass** die Länge der Hubeinrichtung (23) zur Aufnahme eines Containers (4, 34) nach der am größten vorkommenden Containerlänge und die symmetrische Weitung der Seitenständer nach der standardisierten Containerbreite ausgelegt ist, so dass die größte Außenkontur der Hubeinrichtung (23) deckungsgleich zur Außenkontur der Container (4, 34) ist.

11. Vorrichtung nach einem der Ansprüche 5 bis 10,
**dadurch gekennzeichnet,**
**dass** an den Längsholmen (27, 28) der Hubeinrichtung (23) deren freien Abstand überbrückend entsprechend der kleinsten Containerlänge voneinander beabstandet zwei stationäre Teleskopieraufnahmen (35, 36) und entsprechend der größten Containerlänge voneinander beabstandet zwei weitere stationäre Teleskopieraufnahmen (37, 38) angeordnet sind.

12. Vorrichtung nach einem der Ansprüche 5 bis 11,
**dadurch gekennzeichnet,**
**dass** die stationären Teleskopieraufnahmen (35 bis 38) mit ihrem Grundgehäuse (39) an den Unterseiten der Längsholme (27, 28) befestigt sind.

13. Vorrichtung nach einem der Ansprüche 5 bis 12,,
**dadurch gekennzeichnet,**
**dass** die verfahrbaren Teleskopieraufnahmen (40, 41) mit auf ihrem Grundgehäuse (44) in Trag- bzw. Stützböcken (45) hochstehend angeordneten Rollen (46) in den Linearführungen (42) der Längsholme (27, 28) abrollen.

14. Vorrichtung nach Anspruch 13,
**dadurch gekennzeichnet,**
**dass** für jede Linearführung (42) an den Seiten des Grundgehäuses (44) jeweils zwei Doppelrollen (46) vorgesehen sind.

15. Vorrichtung nach einem der Ansprüche 5 bis 14,
**dadurch gekennzeichnet,**
**dass** sowohl das Grundgehäuse (39) der stationärenTeleskopieraufnahmen (35 bis 38) als auch das Grundgehäuse (44) der verfahrbaren Teleskopieraufnahmen (40, 41) ein- und ausziehbare Teleskopschübe (47, 48) aufnimmt, wobei ein äußerer Teleskopschub (47) mit beidseitigen Außen-Führungsprofilen (49) auf Laufrollen (50) des Grundgehäuses (39, 44) und ein innerer Teleskopschub (48) mit beidseitig angeordneten Laufrollen (51) in Innen-Führungsprofilen (52) des äußeren Teleskopschubes (47) läuft.

16. Vorrichtung nach Anspruch 15,
**dadurch gekennzeichnet,**
**dass** zum Verfahren der Teleskopschübe (47, 48) Zahnstangentriebe (53, 54) vorgesehen sind.

17. Vorrichtung nach einem der Ansprüche 5 bis 16,
**dadurch gekennzeichnet,**
**dass** die Teleskopschübe (47, 48) in Richtung der Längsseiteneinlagerung des Containers (4, 34) gesehen ein vorderes, am inneren Teleskopschub (48) und ein hinteres am äußeren Teleskopschub (47) angeordnetes Verriegelungsmittel (59, 60) aufweisen.

## Claims

1. A method for storing and retrieving or transferring containers (4, 34) in high-bay warehouses (1) of a transshipment facility, in particular of a sea or inland port, wherein the containers (4, 34) [are] transported as well as stacked and unstacked or transferred by stacking cranes (7) that can be moved in alleys (6) extending parallel to multistory shelves (3) of the high-bay warehouse (1) arranged in warehouse modules (2), **characterized in that**
linear guides (42) are provided on the facing interior sides of the longitudinal beams (27, 28), which incorporate two telescoping receptacles (40, 41), and
liftable and lowerable telescoping receptacles (35 to 38; 40, 41) of the stacking cranes (7) use their leading longitudinal sides (11) to take the containers (4, 34) from a transport position that preferably does not go beyond the continuous outer contour of the stacking crane (7) and store them in the shelves (3) in a telescoping manner, or to remove them from the latter and telescope them back into the transport position in the stacking crane (7),
wherein the two telescoping receptacles (40, 41) can be moved into the linear guides, and positioned by moving toward and away from each other according to the length of the respective container (4, 34).

2. The method according to claim 1, **characterized in that** the telescoping receptacles (35 to 38; 40, 41) receive the hanging containers (4, 34) for storage or retrieval.

3. The method according to claim 1 or 2, **characterized in that** the containers (4, 34) are stored in the shelves (3) supported only at their corners.

4. The method according to one of claims 1 to 3, **characterized by** a storage process of the kind that,
- at the insertion end (8) of the high-bay warehouse (1), the containers (4, 34) are provided on one side next to the alleys (6), with their longitudinal axis extending parallel to the high-bay warehouse (1), that
- a stacking crane (7) that can move into the alley (6) is then moved in front of the container (4, 34) to be received, and in a hanging position receives a container (4, 34) locked over its attachment points, to which end a handling motion orthogonal to the alley (6) is performed to extend telescoping receptacles (35 to 38; 40, 41) equipped with locking means (59, 60) out of the stacking crane (7) until over the container attachment points and lower it via the latter, that
- after the locking step, the telescoping receptacles (35 to 38; 40, 41) with the attached containers (4, 34) are lifted and moved back into the stacking crane (7) by an opposite handling motion, until the container (4, 34) assumes a hanging position or transport position in the stacking crane (7) that aligns with the alley (6) in the plane, that
- the stacking crane (7) is then moved in the alley (6) in front of a shelf (3) to be occupied, and the telescoping receptacles (35 to 38; 40, 41), which preferably are arranged on a lift bridge (22), are lifted vertically when the shelf (3) is located in a higher story, that
- the container (4, 34) prepositioned in this way is introduced into the shelf (3) orthogonally to the alley (6) by a handling motion of the telescoping receptacles (35 to 38; 40, 41), that
- as a consequence, the container (4, 34) with its container corner regions is placed on corner supports (5) arranged at the vertical posts of the storage modules (2) bordering the shelves (3), and that
- after the container (4, 34) has been unlocked, the telescoping receptacles (35 to 38; 40, 41) are lifted and moved back into their retracted initial position.

5. A device for storing and retrieving or transferring containers (4, 34) in high-bay warehouses (1) of a transshipment facility, in particular of a sea or inland port, wherein the containers (4, 34) are transported as well as stacked and unstacked or transferred by stacking cranes (7) that can be moved in alleys (6) extending parallel to multistory shelves (3) of the high-bay warehouse (1) arranged in warehouse modules (2), in particular for implementing the method, wherein
the high-bay warehouse (1) for storing the containers (4, 34) on the longitudinal side consists of any number of multistory storage modules (2) desired, which are arranged in a row in a longitudinal direction along an alley side and sequentially in the width direction separated by a respective alley (6), have several vertically arranged shelves (3), and have a depth corresponding to the container width, and of stacking cranes (7) that can be moved back and forth in the alleys (6), which are designed to receive a container (4, 34) with telescoping receptacles (35 to 38; 40, 41) that can be retracted and extended as well as lifted and lowered orthogonally to the alley (6),
**characterized in that**
linear guides (42) are provided on the facing interior sides of the longitudinal posts (27, 28), on which two telescoping receptacles (40, 41) can be moved and positioned by a motion toward or away from each other according to the length of the respective container (4, 34) .

6. The device according to claim 5, **characterized in that** the floor-bound stacking crane (7) has a frame (15) that is comprised of vertical stands (12) connected by head and base rails (13, 14), and has a height corresponding to the multistory high-bay warehouse (1).

7. The device according to claim 5 or 6, **characterized in that** the base rails (14) integrate a drive (16) for the floor-bound movement of the stacking crane (7).

8. The device according to one of claims 5 to 7,
**characterized in that**
a hoisting device (23) runs in guides (21) of the vertical stands (12), and consists of side stands (24) that upwardly expand in a fork- or Y-like manner and longitudinal beams (27, 28) that join the latter together into a frame at the two respective opposing fork ends (25, 26) and run parallel spaced apart from each other, wherein parallel running struts (29, 30) spaced apart from each other are provided under the longitudinal beams (27, 28) for stiffening the hoisting device (23), and each extend from the base end of the one side stand (24) to the base end of the other side stand (24).

9. The device according to one of claims 5 to 8,
**characterized in that** the hoisting device (23) is lifted or lowered with a rope mechanism comprised of a rope, a rope drum (32), pulleys (33), a hoist motor and a hoist drive.

10. The device according to one of claims 5 to 9,
**characterized in that** the length of the hoisting device (23) is configured for receiving a container (4, 34) based on the largest arising container length, and the symmetrical expansion of the side stands is configured based on the standardized container width, so that the largest outer contour of the hoisting device (23) is congruent to the outer contour of the containers (4, 34) .

11. The device according to one of claims 5 to 10,
**characterized in that** two stationary telescoping receptacles (35, 36) spaced apart from each other based on the smallest container length and two additional stationary telescoping receptacles (37, 38) spaced apart from each other based on the largest container length are arranged on the longitudinal beams (27, 28) of the hoisting device (23), bridging their free distance.

12. The device according to one of claims 5 to 11,
**characterized in that** the base housing (39) of the stationary telescoping receptacles (35 to 38) is fastened to the undersides of the longitudinal beams (27, 28).

13. The device according to one of claims 5 to 12,
**characterized in that** the rollers (46) of the movable telescoping receptacles (40, 41) arranged high up on the base housing (44) in pedestals or trestles (45) roll off into the linear guides (42) of the longitudinal beams (27, 28).

14. The device according to claim 13, **characterized in that** two respective double rollers (46) are provided for each linear guide (42) on the sides of the base housing (44) .

15. The device according to one of claims 5 to 14,
**characterized in that** both the base housing (39) of the stationary telescoping receptacles (35 to 38) and the base housing (44) of the movable telescoping receptacles (40, 41) receive retractable and extendible telescoping drawers (47, 48), wherein an outer telescoping drawer (47) runs with bilateral exterior guide profiles (49) on track rollers (50) of the base housing (39, 44), and an inner telescoping drawer (48) runs with bilaterally arranged track rollers (51) in interior guide profiles (52) of the outer telescoping drawer (47).

16. The device according to claim 15, **characterized in that** rack-and-pinion drives (53, 54) are provided for moving the telescoping drawers (47, 48).

17. The device according to one of claims 5 to 16,
**characterized in that**, viewed in the direction of where the container (4, 34) is stored on the longitudinal side, the telescoping drawers (47, 48) has a front locking means (59, 60) arranged on the inner telescoping drawer (48) and a rear locking means arranged on the outer telescoping drawer (47).

## Revendications

1. Procédé pour le stockage et le déstockage ou le déplacement de conteneurs (4, 34) dans des entrepôts à rayonnages à grande hauteur (1) d'une installation de manutention, en particulier d'un port marin ou intérieur, dans lequel les conteneurs (4, 34) sont transportés ainsi qu'empilés et désempilés ou déplacés par des appareils de manutention de rayonnages (7) mobiles dans des allées (6) s'étendant parallèlement à des rayons (3) de l'entrepôt à rayonnages à grande hauteur (1) disposés sur plusieurs étages dans des modules d'entrepôt (2), **caractérisé en ce que**
des guides linéaires (42) sont prévus contre les faces intérieures tournées l'une vers l'autre des traverses longitudinales (27, 28), dans lesquels deux réceptions télescopiques (40, 41) sont disposées et
les conteneurs (4, 34) sont entreposés de manière télescopique dans les rayons (3) par des réceptions télescopiques (35 à 38 ; 40, 41) pouvant être levées et abaissées de l'appareil de manutention de rayonnages (7) par leur faces longitudinales (11) en allant vers l'avant hors d'une position de transport ne sortant de préférence pas au-delà du contour extérieur périphérique de l'appareil de manutention de rayonnages (7), respectivement en sont prélevés, et de nouveau téléscopés dans l'appareil de manutention de rayonnages (7) dans la position de transport, dans lequel
les deux réceptions télescopiques (40, 41) peuvent être déplacées dans les guides linéaires et peuvent être positionnées l'une vers l'autre ou l'une éloignée de l'autre par un mouvement, conformément à une longueur du conteneur (4, 34) respectif.

2. Procédé selon la revendication 1, **caractérisé en ce que** les conteneurs (4, 34) sont prélevés suspendus par les réceptions télescopiques (35 à 38 ; 40, 41) pour le stockage, respectivement le déstockage.

3. Procédé selon la revendication 1 ou 2, **caractérisé en ce que** les conteneurs (4, 34) sont entreposés dans les rayons (3) en étant appuyés uniquement contre leurs points angulaires.

4. Procédé selon l'une des revendications 1 à 3, **caractérisé par** une procédure d'entreposage de telle façon
- que sur l'extrémité d'entrée (8) de l'entrepôt à rayonnages à grande hauteur (1), les conteneurs (4, 34) sont fournis en s'étendant par leur axe longitudinal parallèle à l'entrepôt à rayonnages à grande hauteur (1), contre un côté près des allées (6),
- qu'ensuite, un appareil de manutention de rayonnages (7) mobile dans l'allée (6) est déplacé jusque devant le conteneur (4, 34) à recevoir et prend en position suspendue un conteneur (4, 34) bloqué par ses points de suspension, ce pour quoi, par un mouvement de manutention orthogonal à l'allée (6), des réceptions télescopiques (35 à 38 ; 40, 41) dotées de moyens de blocage (59, 60) sont sorties de l'appareil de manutention de rayonnages (7) jusqu'au-dessus des points de suspension des conteneurs et abaissées au-dessus de ceux-ci,
- qu'après le blocage, les réceptions télescopiques (35 à 38 ; 40, 41) sont soulevées avec le conteneur (4, 34) suspendu et renvoyées dans l'appareil de manutention de rayonnages (7) par un mouvement de manutention opposé, jusqu'à ce que le conteneur (4, 34) adopte une position de suspension respective à la position de transport dans l'appareil de manutention de rayonnages (7) alignée dans le plan avec l'allée (6),
- qu'ensuite, l'appareil de manutention de rayonnages (7) est déplacé dans l'allée (6) devant un rayon (3) à occuper et les réceptions télescopiques (35 à 38 ; 40, 41) qui sont disposées de préférence contre un pont levant (22), sont soulevées verticalement lorsque le rayon (3) se trouve à un étage plus élevé,
- que le conteneur (4, 34) ainsi pré-positionné est placé dans le rayon (3) de manière orthogonale à l'allée (6) par un mouvement de manutention des réceptions télescopiques (35 à 38 ; 40, 41),
- qu'ensuite le conteneur (4, 34) est abaissé par ses angles de conteneur sur des appuis (5) de points angulaires disposés contre les montants verticaux des modules d'entreposage (2) délimitant les rayons (3), et
- qu'après le déblocage du conteneur (4, 34), les réceptions télescopiques (35 à 38 ; 40, 41) sont soulevées et déplacées dans leur position rentrée de départ.

5. Dispositif pour le stockage et le déstockage ou le déplacement de conteneurs (4, 34) dans des entrepôts à rayonnages à grande hauteur (1) d'une installation de manutention, en particulier d'un port marin ou intérieur, dans lequel les conteneurs (4, 34) sont transportés ainsi qu'empilés et désempilés ou déplacés par des appareils de manutention de rayonnages (7) mobiles dans des allées (6) s'étendant parallèlement à des rayons (3) de l'entrepôt à rayonnages à grande hauteur (1) disposés sur plusieurs étages dans des modules d'entrepôt (2), en particulier pour exécuter le procédé, dans lequel
l'entrepôt à rayonnages à grande hauteur (1), pour le stockage des conteneurs (4, 34) sur les faces longitudinales, est composé de nombreux modules d'entrepôt (2), au choix, successifs, de plusieurs étages, mis en rangs l'un contre l'autre dans le sens longitudinal le long d'un côté d'allée et séparés dans le sens de la largeur respectivement par une allée (6), présentant plusieurs rayons (3) dans la hauteur, avec une profondeur correspondant à la largeur de conteneur, et présente des appareils de manutention de rayonnages (7) mobiles d'avant en arrière dans les allées (6), qui sont conçus pour recevoir un conteneur (4, 34) avec des réceptions télescopiques (35 à 38 ; 40, 41) pouvant être rentrées et sorties ainsi que soulevées et abaissées de façon orthogonale à l'allée (6),
**caractérisé en ce que**
des guides linéaires (42) sont prévus contre les faces intérieures tournées l'une vers l'autre des traverses longitudinales (27, 28) dans lesquels deux réceptions télescopiques (40, 41) sont mobiles et peuvent être positionnées l'une vers l'autre ou l'une éloignée de l'autre par un mouvement, conformément à la longueur du conteneur (4, 34) respectif.

6. Dispositif selon la revendication 5, **caractérisé en ce que** l'appareil de manutention des rayonnages (7) relié au sol présente un cadre (15) composé de montants verticaux (12) et de traverses de tête et de pied (13, 14) reliant ceux-ci avec une hauteur correspondant à l'entrepôt à rayonnages à grande hauteur (1) à plusieurs étages.

7. Dispositif selon la revendication 5 ou 6, **caractérisé en ce qu'**un entraînement (16) pour le déplacement relié au sol de l'appareil de manutention des rayonnages (7) est intégré dans les traverses de pied (14) .

8. Dispositif selon l'une des revendications 5 à 7,
**caractérisé en ce que**
dans des guides (21) des montants verticaux (12) passe un dispositif de levage (23) qui est composé de montants latéraux (24) s'étendant en fourche ou en y vers le haut et de traverses longitudinales (27, 28) parallèles à distance entre elles, reliant ceux-ci en un cadre aux deux extrémités de fourche (25, 26) se faisant respectivement face, dans lequel pour rigidifier le dispositif de levage (23), des traverses (29, 30) parallèles entre elles à distance sont prévus en-dessous des traverses longitudinales (27, 28), lesquels s'étendent respectivement de l'extrémité de pied de l'un montant vertical (24) à l'extrémité de pied de l'autre montant vertical (24).

9. Dispositif selon l'une des revendications 5 à 8,
**caractérisé en ce qu'**un soulèvement, respectivement un abaissement du dispositif de levage (23) s'effectue par le biais d'un dispositif à câble, se composant d'un câble, d'un tambour à câble (32), de poulies de renvoi (33), d'un moteur de levage et d'une transmission de levage.

10. Dispositif selon l'une des revendications 5 à 9,
**caractérisé en ce que** la longueur du dispositif de levage (23) pour recevoir un conteneur (4, 34) selon la longueur de conteneur arrivant la plus longue et l'élargissement symétrique des montants latéraux selon la largeur de conteneur normalisée sont conçus de façon à ce que le contour extérieur le plus grand du dispositif de levage (23) coïncide avec le contour extérieur des conteneurs (4, 34).

11. Dispositif selon l'une des revendications 5 à 10,
**caractérisé en ce que** deux réceptions télescopiques fixes (35, 36) à distance l'une de l'autre conformément à la plus petite longueur de conteneur et deux autres réceptions télescopiques fixes (37, 38) à distance l'une de l'autre conformément à la plus grande longueur de conteneur sont disposées sur les traverses longitudinales (27, 28) du dispositif de levage (23) en recouvrant sa distance libre.

12. Dispositif selon l'une des revendications 5 à 11,
**caractérisé en ce que** les réceptions télescopiques fixes (35 à 38) sont fixées aux sous-faces des traverses longitudinales (27, 28) par leur logement de base (39).

13. Dispositif selon l'une des revendications 5 à 12,
**caractérisé en ce que** les réceptions télescopiques mobiles (40, 41) roulent dans les guides linéaires (42) des traverses longitudinales (27, 28) avec des roulettes (46) disposées verticalement dans des supports porteurs ou d'appui (45) sur leur logement de base (44).

14. Dispositif selon la revendication 13, **caractérisé en ce que** respectivement deux roulettes doubles (46) sont prévues pour chaque guide linéaire (42) sur les côtés du logement de base (44).

15. Dispositif selon l'une des revendications 5 à 14,
**caractérisé en ce que** tant le logement de base (39) des réceptions télescopiques fixes (35 à 38) que le logement de base (44) des réceptions télescopiques mobiles (40, 41) reçoit des tiroirs télescopiques (47, 48) pouvant être rentrés et sortis, dans lequel un tiroir télescopique extérieur (47) avec des profilés de guidage extérieurs (49) de chaque côté se déplace sur des galets de roulement (50) du logement de base (39, 44) et un tiroir télescopique intérieur (48) avec des galets (51) disposés de chaque côté se déplace dans des profilés de guidage intérieurs (52) du tiroir télescopique extérieur (47).

16. Dispositif selon la revendication 15, **caractérisé en ce que** des engrenages à crémaillère (53, 54) sont prévus pour déplacer les tiroirs télescopiques (47, 48) .

17. Dispositif selon l'une des revendications 5 à 16,
**caractérisé en ce que** les tiroirs télescopiques (47, 48), vu dans le sens d'entreposage des côtés longitudinaux du conteneur (4, 34), présentent un moyen de blocage (59, 60) avant sur le tiroir télescopique intérieur (48) et arrière sur le tiroir télescopique extérieur (47).
